# EUROPÄISCHE PATENTANMELDUNG

(11) **EP 2 034 342 A1**
(43) Veröffentlichungstag der Anmeldung: **11.03.2009**
(21) Anmeldenummer: 08014609.5
(22) Anmeldetag: 18.08.2008
(51) Int. Cl.: G02B 6/255, G02B 6/44

(54) **Haltevorrichtung für Spleißschutzeinrichtungen mit in den Spleißschutzeinrichtungen aufgenommenen Spleißen von Lichtwellenleitern**

(30) Priorität: 05.09.2007 DE 202007012420 U
(71) Anmelder: CCS Technology, Inc., Wilmington, DE 19803 (US)
(72) Erfinder: Lapp, Oliver, Dipl.-Ing., 42399 Wuppertal (DE); Zamzow, Bert, Dr.-Ing., 82131 Gauting (DE)
(74) Vertreter: Sturm, Christoph

(57) **Zusammenfassung**

Die Erfindung betrifft eine Haltevorrichtung (20) für Spleißschutzeinrichtungen mit in den Spleißschutzeinrichtungen aufgenommen Spleißen von Lichtwellenleitern, mit einer Bodenwand (21) und mehreren an der Bodenwand angreifenden Trennelementen (22, 23), wobei die Trennelemente im wesentlichen parallel zueinander verlaufende Ausnahmebereiche (24) für jeweils eine Spleißschutzeinrichtungen voneinander abgrenzen. Erfindungsgemäß sind die Trennelemente (22, 23) derart ausgebildet und relativ zueinander positioniert, dass die Aufnahmebereiche (24) in Längsrichtung derselben gesehen eine sich verändernden Breite aufweisen, sodass Spleißschutzeinrichtungen (25) in den Aufnahmebereichen (24) elastisch biegbar und an den Trennelementen (22, 23) verspannbar sind.

## Beschreibung

Die Erfindung betrifft eine Haltevorrichtung für Spleißschutzeinrichtungen mit in den Spleißschutzeinrichtungen aufgenommenen Spleißen von Lichtwellenleitern nach dem Oberbegriff des Anspruchs 1.

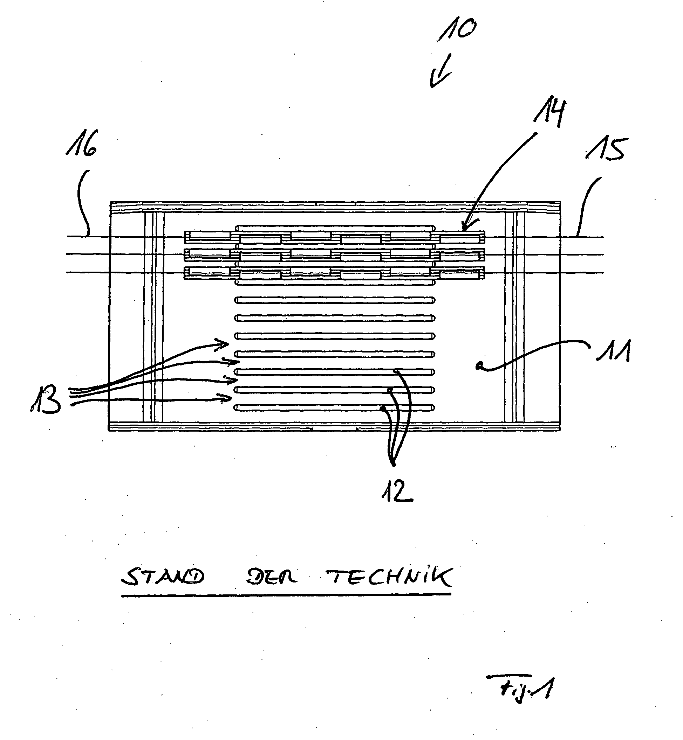

Fig. 1 zeigt eine aus dem Stand der Technik bekannte Haltevorrichtung für Spleißschutzeinrichtungen mit in den Spleißschutzeinrichtungen aufgenommenen Spleißen von Lichtwellenleitern. Die in Fig. 1 dargestellte, aus dem Stand der Technik bekannte Haltevorrichtung 10 weist eine Bodenwand 11 sowie mehrere an der Bodenwand 11 angreifende Trennelemente 12 auf, wobei die Trennelemente 12 im Wesentlichen parallel zueinander verlaufende Aufnahmebereiche 13 für Spleißschutzeinrichtungen voneinander abgrenzen. Jeder Aufnahmebereich 13 dient der Aufnahme einer Spleißschutzeinrichtung 14, wobei in Fig. 1 in drei Aufnahmebereichen 13 jeweils eine als Krimpspleißschutz ausgebildete Spleißschutzeinrichtung 14 positioniert ist. Die Spleißschutzeinrichtungen 14 dienen der Aufnahme und dem Schutz eines zwischen zwei Lichtwellenleitern 15, 16 ausgebildeten Spleißes.

Bei der aus dem Stand der Technik bekannten Haltevorrichtung 10 sind die Trennelemente 12 als Trennwände derart ausgebildet, dass die Aufnahmebereiche 13 in Längsrichtung derselben gesehen, eine konstante Breite aufweisen. In solchen Aufnahmebereichen 13 finden Spleißschutzeinrichtungen 14 Aufnahme, die gegenüber der Breite der Aufnahmebereiche 13 ein definiertes Übermaß aufweisen.

Dabei muss das Übermaß der Spleißschutzeinrichtungen 14 genau eingehalten werden, da dann, wenn die Spleißschutzeinrichtungen 14 in ihrer Breite zu gering ausfallen, dieselben in den Aufnahmebereichen 13 keinen ausreichenden Halt finden, und dann, wenn die Spleißschutzeinrichtungen 14 eine zu große Breite aufweisen, dieselben zu stark zusammengedrückt werden, wodurch in den Lichtwellenleitern 15, 16 eine zu starke Dämpfung verursacht werden kann.

Hiervon ausgehend liegt der vorliegenden Erfindung das Problem zu Grunde, eine neuartige Haltevorrichtung für Spleißschutzeinrichtungen mit in den Spleißschutzeinrichtungen aufgenommen Spleißen von Lichtwellenleitern zu schaffen, in welcher Spleißschutzeinrichtungen, die mit einer größeren Breitentoleranz behaftet sind, sicher ohne die Gefahr von in die Lichtwellenleiter eingetragenen Dämpfungen aufgenommen werden können.

Dieses Problem wird durch eine Haltevorrichtung gemäß Anspruch 1 gelöst. Erfindungsgemäß sind die Trennelemente derart ausgebildet und relativ zueinander positioniert, dass die Aufnahmebereiche in Längsrichtung derselben gesehen eine sich verändernden Breite aufweisen, sodass die Spleißschutzeinrichtungen in den Aufnahmebereichen elastisch biegbar und an den Trennelementen verspannbar sind.

Bedingt durch die erfindungsgemäße Ausgestaltung der Haltevorrichtung für Spleißschutzeinrichtungen können Spleißschutzeinrichtungen, die mit einer größeren Breitentoleranz behaftet sind, in der Haltevorrichtung sicher aufgenommen werden. Die Spleißschutzeinrichtungen finden unter elastischer Verbiegung derselben in den Aufnahmebereichen der Haltevorrichtung Aufnahme, wobei die Spleißschutzeinrichtungen an den Trennelementen verspannt sind. Da ein sich bei der Durchbiegung der Spleißschutzeinrichtungen ausbildender Biegeradius des Spleißes deutlich größer ist als ein Mindestbiegeradius der Lichtwellenleiter, besteht keine Gefahr, dass in den Lichtwellenleiter unzulässige Dämpfungen eingetragen werden.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigen:
- Fig. 1:: eine aus dem Stand der Technik bekannte Haltevorrichtung für Spleißschutzeinrichtungen zusammen mit Spleißschutzeinrichtun- gen sowie in den Spleißschutzeinrichtungen aufgenommen Splei- ßen von Lichtwellenleitern;
- Fig. 2:: eine erfindungsgemäße Haltevorrichtung für Spleißschutzeinrich- tungen mit in den Spleißschutzeinrichtungen aufgenommen Splei- ßen von Lichtwellenleitern;
- Fig. 3:: die erfindungsgemäße Haltevorrichtung der Fig. 2 zusammen mit Spleißschutzeinrichtungen sowie in den Spleißschutzeinrichtun- gen aufgenommen Spleißen von Lichtwellenleitern;
- Fig. 4:: einen Ausschnitt aus der Haltevorrichtung der Fig. 3; und
- Fig. 5:: eine perspektivische Ansicht der Haltevorrichtung der Fig. 3.

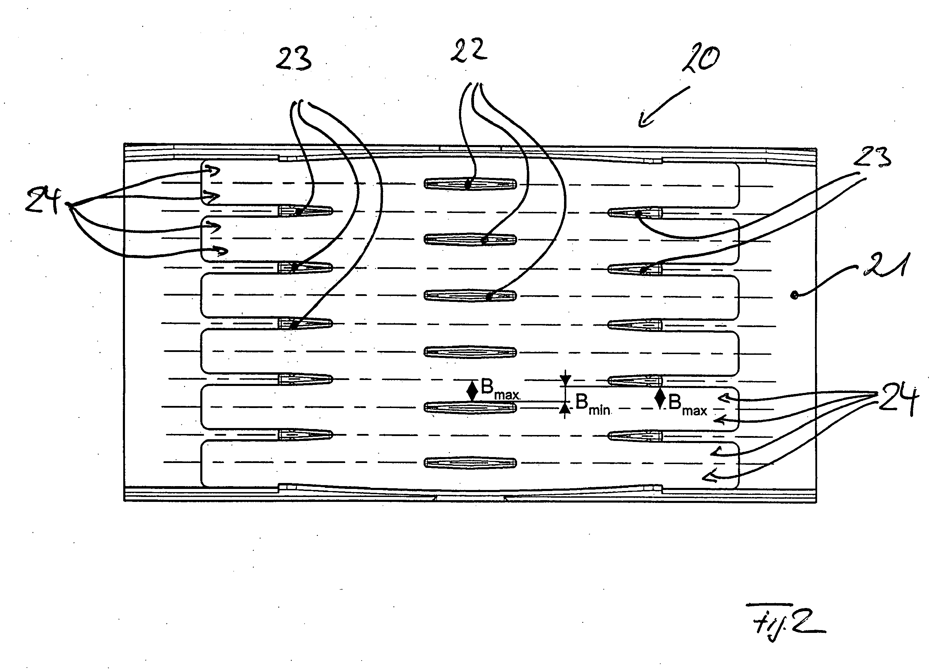

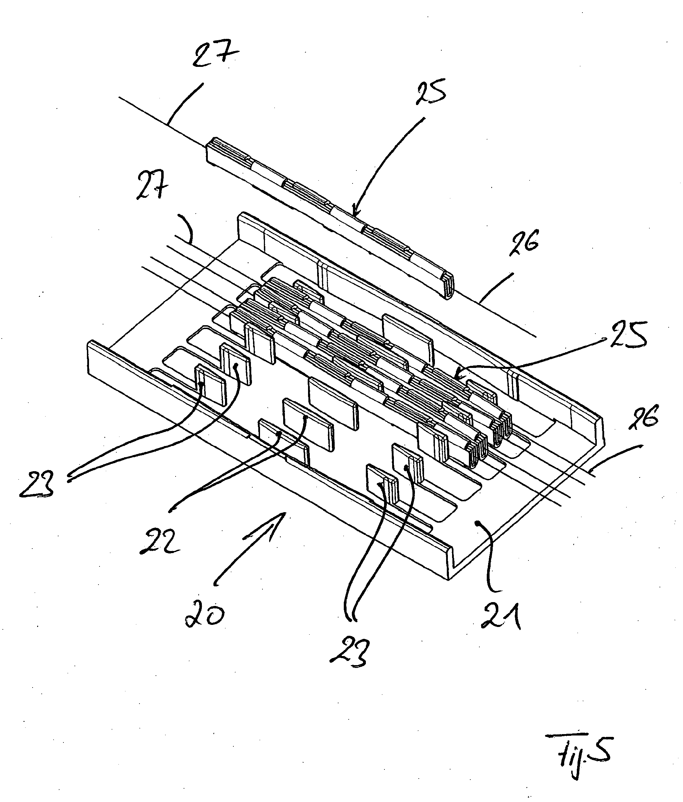

Fig. 2 bis 5 zeigen unterschiedliche Ansichten einer erfindungsgemäßen Haltevorrichtung 20 für Spleißschutzeinrichtungen mit in den Spleißschutzeinrichtungen aufgenommenen Spleißen von Lichtwellenleitern. Die erfindungsgemäße Spleißschutzeinrichtung 20 verfügt wiederum über eine Bodenwand 21 und mehrere an der Bodenwand 21 angreifende Trennelemente 22, 23. Die Trennelemente 22, 23 grenzen wiederum im Wesentlichen parallel zueinander verlaufende Aufnahmebereiche 24 für Spleißschutzeinrichtungen voneinander ab, wobei jeder Aufnahmebereich 24 der Aufnahme einer Spleißschutzeinrichtung dient.

Im gezeigten Ausführungsbeispiel können demnach insgesamt zwölf Spleißschutzeinrichtungen in der Haltevorrichtung 20 aufgenommen werden, wozu dieselbe insgesamt zwölf im Wesentlichen parallel zueinander verlaufende Aufnahmebereiche 24 aufweist.

Die Trennwände 22, 23 sind derart ausgebildet und relativ zueinander positioniert, dass die Aufnahmebereiche in Längsrichtung derselben gesehen eine sich verändernde Breite aufweisen, nämlich eine sich zwischen einer minimalen Breite Bₘᵢₙ und einer maximalen Breite Bₘₐₓ verändernde Breite.

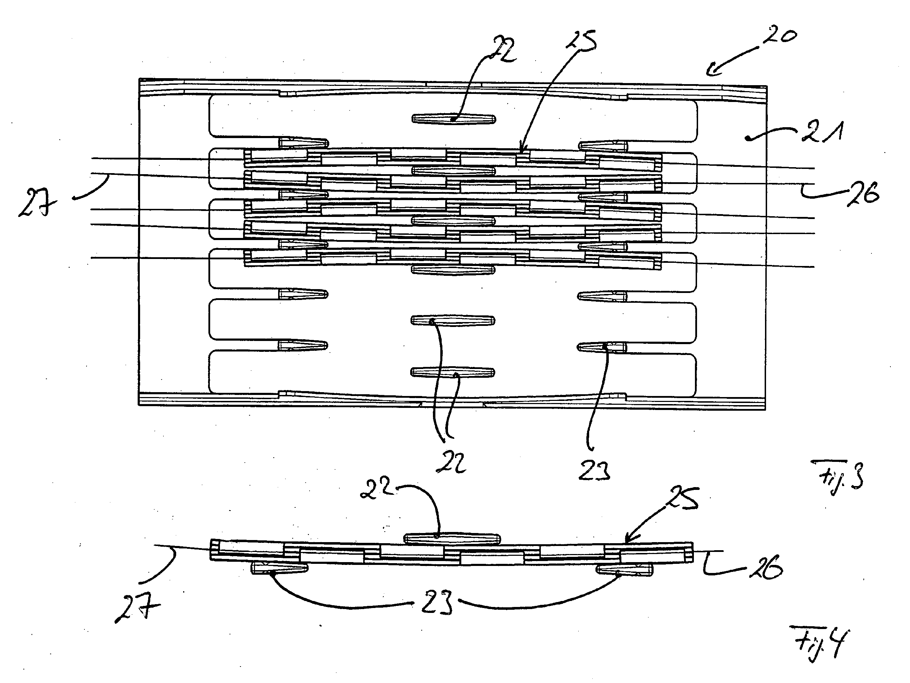

Spleißschutzeinrichtungen 25 (siehe Fig. 3 bis 5) sind bei Positionierung derselben in den Aufnahmebereichen 24 elastisch biegbar und an den Trennelementen 22, 23 verspannbar. Der Biegeradius einer Spleißschutzeinrichtung 25 liegt dabei weit über einem zulässigen Mindestbiegeradius von in der Spleißschutzeinrichtung 25 aufgenommenen Lichtwellenleitern 26, 27.

Die Spleißschutzeinrichtungen 25 übernehmen die Funktion eines Federelements, um Toleranzen in der Breite der Spleißschutzeinrichtungen 25 und der Geometrie der Trennelemente 22, 23 auszugleichen. Hierdurch kann im Vergleich zum Stand der Technik ein größerer Toleranzbereich in der Breite der Spleißschutzeinrichtungen 25 ausgeglichen werden, ohne dass für die Haltevorrichtung 20 gegenüber dem Stand der Technik ein größerer Bauraum benötigt wird.

In jeder Aufnahmeeinrichtung 24 kann jeweils eine Spleißschutzeinrichtung 25 Aufnahme finden, deren Breite zwischen der minimalen Breite Bₘᵢₙ und der maximalen Breite Bₘₐₓ liegt.

In Längsrichtung der Aufnahmebereiche 24 gesehen sind die Trennelemente 22, 23 voneinander beabstandet, sodass entlang einer in einem Aufnahmebereich 24 aufgenommenen Spleißschutzeinrichtung 25 an Abschnitten ein Trennelement 22 bzw. 23 anliegt, wohingegen an anderen Abschnitten kein Trennelement anliegt.

Im gezeigten Ausführungsbeispiel greift an einer ersten Längsseite einer jeden Spleißschutzeinrichtung 25 an beiden äußeren bzw. seitlichen Endabschnitten derselben jeweils mindestens ein erstes Trennelement 23 an.

An einer der ersten Längsseite gegenüberliegenden zweiten Trennelement einer jeden Spleißschutzeinrichtung 25 greift an einem mittleren Abschnitt derselben jeweils mindestens ein zweites Trennelement 22 an.

An einer ersten Längsseite der Spleißschutzeinrichtungen 25 sind dieselben demnach an äußeren Endabschnitten über die Trennelemente 23 abgestützt, an der gegenüberliegenden Längsseite sind dieselben hingegen in einem mittleren Abschnitt an den Trennelementen 22 abgestützt. Jede Spleißschutzeinrichtungen 25 ist demnach im gezeigten Ausführungsbeispiel an drei Trennelementen verspannt.

Wie am besten Fig. 2 entnommen werden kann, sind die ersten und zweiten Trennelemente unterschiedlich gewölbt, nämlich im gezeigten Ausführungsbeispiel derart, dass die ersten Trennelemente 23, die an den äußeren Endabschnitten der Spleißschutzeinrichtungen angreifen, nach innen bzw. konkav und die zweiten Trennelemente 22, die an den mittleren Abschnitten der Spleißschutzeinrichtungen angreifen, nach außen bzw. konvex gewölbt sind.

Ebenso ist es möglich, dass die ersten Trennelemente nach außen bzw. konvex und die zweiten Trennelemente nach innen bzw. konkav gewölbt sind.

Die in der erfindungsgemäßen Haltevorrichtung 20 aufgenommenen Spleißschutzeinrichtungen können als Krimpspleißschutz oder auch als Schrumpfspleißschutz ausgebildet sein.

### Bezugszeichenliste

- 10: Haltevorrichtung
- 11: Bodenwand
- 12: Trennelement
- 13: Aufnahmebereich
- 14: Spleißschutzeinrichtung
- 15: Lichtwellenleiter
- 16: Lichtwellenleiter

- 20: Haltevorrichtung
- 21: Bodenwand
- 22: Trennelement
- 23: Trennelement
- 24: Aufnahmebereich
- 25: Spleißschutzeinrichtung
- 26: Lichtwellenleiter
- 27: Lichtwellenleiter

## Patentansprüche

1. Haltevorrichtung für Spleißschutzeinrichtungen mit in den Spleißschutzeinrichtungen aufgenommen Spleißen von Lichtwellenleitern, mit einer Bodenwand und mehreren an der Bodenwand angreifenden Trennelementen, wobei die Trennelemente im wesentlichen parallel zueinander verlaufende Ausnahmebereiche für jeweils eine Spleißschutzeinrichtungen voneinander abgrenzen, **dadurch gekennzeichnet, dass** die Trennelemente (22, 23) derart ausgebildet und relativ zueinander positioniert sind, dass die Aufnahmebereiche (24) in Längsrichtung derselben gesehen eine sich verändernden Breite aufweisen, sodass Spleißschutzeinrichtungen (25) in den Aufnahmebereichen (24) elastisch biegbar und an den Trennelementen (22, 23) verspannbar sind.

2. Haltevorrichtung nach Anspruch 1, **dadurch gekennzeichnet, dass** die Trennelemente (22, 23) derart ausgebildet und relativ zueinander positioniert sind, dass sich die Breite der Aufnahmebereiche (24) in Längsrichtung derselben gesehen zwischen einer minimalen Breite und einer maximalen Breite verändert, sodass in jedem Aufnahmebereiche (24) eine Spleißschutzeinrichtung elastisch biegbar und an den jeweiligen Trennelementen verspannbar ist, deren Breite zwischen der minimalen Breite und einer maximalen Breite liegt.

3. Haltevorrichtung nach Anspruch 1 oder 2, **dadurch gekennzeichnet, dass** in Längsrichtung jeder Spleißschutzeinrichtung (25) an derselben mehrere in Längsrichtung voneinander beabstandete Trennelemente (22, 23) anliegen.

4. Haltevorrichtung nach Anspruch 3, **dadurch gekennzeichnet, dass** an einer ersten Längsseite einer jeden Spleißschutzeinrichtung an äußeren Endabschnitten derselben jeweils mindestens ein erstes Trennelement (23) anliegt.

5. Haltevorrichtung nach Anspruch 4, **dadurch gekennzeichnet, dass** an einer der ersten Längsseite gegenüberliegenden zweiten Längsseite einer jeden Spleißschutzeinrichtung an einem mittleren Abschnitt derselben jeweils mindestens ein zweites Trennelement (22) anliegt.

6. Haltevorrichtung nach Anspruch 4 oder 5, **dadurch gekennzeichnet, dass** die ersten und die zweiten Trennelemente unterschiedlich gewölbt sind, nämlich die ersten Trennelemente nach innen bzw. konkav und die zweiten Trennelemente nach außen bzw. konvex.

7. Haltevorrichtung nach Anspruch 4 oder 5, **dadurch gekennzeichnet, dass** die ersten und die zweiten Trennelemente unterschiedlich gewölbt sind, nämlich die ersten Trennelemente nach außen bzw. konvex und die zweiten Trennelemente nach innen bzw. konkav.

8. Haltevorrichtung nach einem der Ansprüche 1 bis 7, **dadurch gekennzeichnet, dass** in Längsrichtung der Aufnahmebereiche (24) gesehen die Trennelemente (22, 23) derart voneinander beabstandet sind, dass an beiden Längsseiten einer in einem Aufnahmebereich (24) aufgenommenen Spleißschutzeinrichtung (25) an Abschnitten ein Trennelement anliegt und an anderen Abschnitten kein Trennelement anliegt.
